# EUROPÄISCHE PATENTSCHRIFT

(11) **EP 2 507 080 B1**
(45) Veröffentlichungstag und Bekanntmachung des Hinweises auf die Patenterteilung: **21.02.2018**
(21) Anmeldenummer: 10792822.8
(22) Anmeldetag: 01.12.2010
(51) Int. Cl.: B60H 1/00, B60H 1/02, F01P 7/16

(54) **FAHRZEUG MIT EINEM KÜHLMITTELKREISLAUF ZUR WÄRMEVERTEILUNG AN FAHRZEUGAGGREGATE**
VEHICLE HAVING A COOLANT CIRCUIT FOR HEAT DISTRIBUTION TO VEHICLE ASSEMBLIES
VÉHICULE DOTÉ D'UN CIRCUIT DE RÉFRIGÉRANT SERVANT À DISTRIBUER LA CHALEUR À DES ORGANES DE VÉHICULE

(30) Priorität: 02.12.2009 DE 102009056616
(43) Veröffentlichungstag der Anmeldung: 10.10.2012
(73) Patentinhaber: Audi AG, 85045 Ingolstadt (DE)
(72) Erfinder: SCHALK, Michael, 85139 Wettstetten (DE); BERRINGER Alexander, 85092 Kösching (DE); KOCH, Matthias, 85113 Böhmfeld (DE); KOBS, Thomas, 82110 Germering (DE); GRAMS, Sebastian, 74906 Bad Rappenau (DE)
(74) Vertreter: Neuhausen, Marc-Alexander
(86) Internationale Anmeldenummer: PCT/EP2010/007270
(87) Internationale Veröffentlichungsnummer: WO 2011/066951

(56) Entgegenhaltungen:
- EP-A2- 1 331 115
- US-A- 5 497 941
- US-A1- 2004 194 949
- US-A1- 2008 251 235
- US-A1- 2009 020 620

## Beschreibung

Die Erfindung betrifft ein Verfahren zur Verteilung von Wärme in einem Kühlmittelkreislauf eines Fahrzeugs nach dem Oberbergriff des Anspruchs 1. Moderne Kraftfahrzeuge sollen aus Gründen der Umweltverträglichkeit und der Kostenbelastung für den Nutzer möglichst wenig Kraftstoff verbrauchen, ohne dass der Nutzer dafür Einschränkungen im Komfort hinnehmen muss. Im Rahmen verbrauchsreduzierender Maßnahmen in Kraftfahrzeugen spielt die gezielte Verteilung der im Kühlwasser vorhandenen Wärmemenge an verschiedene Aggregate (zum Beispiel Motor, Getriebe, Heizung) eine entscheidende Rolle.
In einem Fahrzeug kann die Abwärme in der Brennkraftmaschine über einen Kühlmittelkreislauf auf die Heizung und/oder auf das Getriebe übertragen werden. Im Kühlmittelkreislauf sind Stellglieder geschaltet, die den Kühlmittelstrom einstellen. Die Stellglieder werden in Abhängigkeit von einem Heiz- oder Kühlbedarf angesteuert, der jeweils im, der Heizung zugeordneten Klimasteuergerät, im Steuergerät des Getriebes oder im Steuergerät der Brennkraftmaschine ermittelt wird.
Aus der EP 1 331 115 B1 ist eine gattungsgemäße Klimaanlage bekannt, bei der eine Energieabschätzung erfolgt, um den Energieverbrauch in unterschiedlichen Betriebsmoden zu ermitteln. Ferner beschreibt die EP 1 331 115 B1 eine Abschätzung der Wärmelast unter Berücksichtigung einer Anzahl physikalischer Größen, wie zum Beispiel Außenlufttemperatur, Raumlufttemperatur, Fahrgeschwindigkeit, Feuchtigkeit, etc.

Aus der US 2009/020620 A1 ist ein Fahrzeug mit einem Kühlmittelkreislauf bekannt, in dem Stellglieder zur Verteilung von in einer Brennkraftmaschine erzeugter Wärme aufweist.

Die Aufgabe der Erfindung besteht darin, ein Verfahren mit einer verbesserten Verteilung einer im Kühlmittelkreislauf vorhandenen Wärmemenge an Fahrzeugaggregate bereitzustellen, so dass der Kraftstoffverbrauch des Fahrzeugs weiter reduziert wird, ohne dass der Benutzer Einschränkungen im Komfort hinnehmen muss.

Die Aufgabe ist durch die Merkmale des Patentanspruches 1 gelöst. Vorteilhafte Weiterbildungen der Erfindung sind in den abhängigen Ansprüchen offenbart.

Gemäß dem Patentanspruch 1 sind die Steuergeräte der in den Kühlkreislauf geschalteten Aggregate signaltechnisch mit einer zentralen Auswerteeinrichtung in Verbindung. Die Auswerteeinrichtung empfängt Bedarfssignale von den Steuergeräten, das heißt zum Beispiel dem Klimasteuergerät oder dem Motorsteuergerät. Jedes der Bedarfssignale repräsentiert den Heiz- oder Kühlbedarf des jeweiligen Aggregates. Die Bedarfssignale werden ausgewertet, insbesondere gewichtet und/oder priorisiert. Auf dieser Grundlage werden Steuersignale für die Stellglieder des Kühlmittelkreislaufs erzeugt. Auf diese Weise kann nicht nur eine optimale Verteilung der Wärmemengen zur Aufheizung bestimmter Bereiche im Fahrzeug erreicht werden, sondern auch die Kühlung der Aggregate sichergestellt sein, um eine Überhitzung und dadurch entstehende kostenintensive Schäden zu vermeiden.

Hervorzuheben ist, dass die erfindungsgemäße Gewichtung und Priorisierung der Bedarfsgrößen für die Wärme/Kälte entlang einer bestimmten Kaskade (Reihenfolge) erfolgt. Der Strategie zur Gewichtung und Priorisierung liegt der elementare Gedanke zu Grunde, dass Wünsche der Fahrzeuginsassen nach Heizleistung - abgesehen von der Phase nach dem Motorstart - immer Vorrang vor einem verbesserten Aufheizen des Motors und des Getriebes haben.

Nichtsdestotrotz ist die Strategie so ausgelegt, dass bei bestehendem Heizwunsch für den Innenraum das Getriebe nach Möglichkeit (zur Verbrauchssenkung) mit geheizt wird. Dies hängt jedoch von der Höhe des Innenraum-Heizwunsches ab. Nach dem Motorstart wird jedoch zunächst der Motor mit seinem Heizwunsch (Heiz-Bedarfssignal) in den Vordergrund gestellt, damit ein schnelleres Aufheizen des zur Verfügung stehenden Mediums (Kühlwasser), das zur Übertragung der Energie verwendet wird, erzielt wird. Der erfindungsgemäßen Vorgehensweise wird ein optimaler Wärmezustand des Gesamtsystems aus Brennkraftmaschine, Getriebe und Heizung sichergestellt und der bestehende Zielkonflikt zwischen Verbrauchssenkung (im Sinne von geringem Verbrauch und verfügbarer Heizleistung) und der verfügbaren Heizleistung gelöst.

Die gezielte Verteilung der Wärme ermöglicht sowohl einen Verbrauchsvorteil durch Reibungsminimierung als auch eine ausreichende Versorgung des Innenraums mit Heizleistung. Um einen Teil der im Kühlwasserkreislauf vorhandenen Wärmemenge abzuzweigen und beispielsweise zur Reibungsminimierung in den Aggregaten zu nutzen, muss die von der Heizung des Fahrzeuginnenraums geforderte Heizleistung ermittelt werden.

Neben der Brennkraftmaschine und der Heizung kann das Getriebe als drittes Aggregat mit dem Kühlkreislauf verbunden sein. Die zentrale Auswerteeinrichtung kann das vom dritten Aggregat kommende Bedarfssignal bei der Auswertung berücksichtigen. Für Testzyklen vor der Einstufung des Kraftfahrzeugs hinsichtlich dessen CO₂-Ausstoßes kann beispielsweise die Heizung komplett abgeschaltet sein, wodurch die vorhandene Wärmeenergie komplett zur Reibungsminimierung in den Aggregaten, insbesondere dem Getriebe, genutzt werden kann.

Insbesondere kann die zentrale Auswerteeinrichtung mit den Steuergeräten über Signalleitungen verbunden sein, durch welche die Bedarfssignale und/oder die Steuersignale übertragbar sind. Somit steuern die Steuergeräte die Stellglieder nicht autark sondern in Abhängigkeit der von der zentralen Auswerteeinrichtung übertragenen Steuersignale an.

In einer konkreten Ausführung können die Bedarfssignale und/oder die Steuersignale über einen CAN-Bus des Fahrzeugs übertragbar sein. Auf diese Weise kann ein im Kraftfahrzeug standardmäßig vorhandenes Netzwerk zur Datenübertragung verwendet werden.

Bevorzugt können die Stellglieder Pumpen und/oder Ventile im Kühlmittelkreislauf umfassen. Dadurch kann eine Verteilung der Wärmemengen im Kühlmittelkreislauf durch standardmäßig im Kraftfahrzeug vorhandene Komponenten verteilt werden.

Insbesondere kann die zentrale Auswerteeinrichtung mit einem der Steuergeräte als ein Bauteil ausgebildet sein. Bei der Integration der zentralen Auswerteeinrichtung in das Motorsteuergerät ist beispielsweise die Nähe zum wärmeerzeugenden System, das heißt dem Verbrennungsmotor, von Vorteil.

Bei einer Hybridbauweise des Fahrzeugs kann die Wärme zudem auf eine E-Maschine als weiteres Aggregat verteilbar sein. Somit kann die Wärme auch im Falle eines Fahrzeugs der Hybridbauweise optimal verteilt werden, wodurch der Kraftstoffverbrauch weiter reduziert werden kann. Zusätzlich kann die E-Maschine im Bedarfsfall gekühlt und somit vor Überhitzungsschäden bewahrt werden.

Der mittels der zentralen Auswerteeinrichtung der Heizung zugeteilte Wärmeanteil wird über zumindest einen Wärmetauscher auf einen in den Fahrzeuginnenraum strömenden Luftstrom übertragen. Die Heizung weist ein Regelorgan auf, mit dem die Wärmebeladung des Luftstroms einstellbar ist. Ferner schätzt das Klimasteuergerät zunächst auf Basis eines Kennfeldwerts aus einem Kennfeld in Abhängigkeit einer Außentemperatur und einer Sollausblastemperatur in erster Näherung den Heiz- oder Kühlbedarf ab und generiert daraus ein Bedarfssignal. Das so abgeschätzte Bedarfssignal wird dann in Abhängigkeit einer Stellgröße des Regelorgans korrigiert und an die Auswerteeinrichtung geleitet. Somit kann eine Vielzahl von physikalischen Größen für die Verteilung der im Kühlmittelkreislauf befindlichen Wärmemenge berücksichtigt werden, wodurch die Verteilung der Wärmemenge weiter optimiert wird.

Durch die Verwendung von Kennfeldwerten kann ein mehrstufiger Heizbedarf realisiert sein, welcher mittels des Bedarfsignals vom Klimasteuergerät an die zentrale Auswerteeinrichtung übermittelt wird. So kann zum Beispiel der Kennfeldwert 0 "volle Heizleistung", der Kennfeldwert 1 "mittlere Heizleistung", der Kennfeldwert 2 "kleine Heizleistung" und der Kennfeldwert 3 "keine Heizleistung" bedeuten. Im Rahmen einer Plausibilitätsprüfung kann der Kennfeldwert dann in Abhängigkeit der Stellgröße des Regelorgans überprüft und das Bedarfssignal erzeugt werden. Die Stellgröße des Regelorgans kann bevorzugt die Winkelstellung einer Temperaturmischklappe oder auch die Öffnungsdauer beziehungsweise der Öffnungsgrad eines dem Heizelement der Heizung zugeordneten Ventils sein.

In einer konkreten Ausführung kann der Kennfeldwert beim Unterschreiten und/oder Überschreiten eines Schwellenwertes der Stellgröße des Regelorgans im Rahmen der Plausibilitätsprüfung abgeändert, insbesondere um Eins inkrementiert oder dekrementiert, werden. Nach der Abänderung des Kennfeldwertes kann der Schwellenwert ebenfalls abgeändert werden, so dass der abgeänderte Kennfeldwert erst beim Über- beziehungsweise Unterschreiten des abgeänderten Schwellenwertes wieder zurückgesetzt wird.

Das Klimasteuergerät kann die Erzeugung des Bedarfssignals der Heizung in bestimmten Zeitabständen, insbesondere im Millisekundenbereich, wiederholen, so dass immer ein aktueller Heizbedarf an die zentrale Auswerteeinrichtung übermittelt werden kann. In einem bestimmten Betriebszustand der Heizung, insbesondere On-Off-Modus und/oder Kaltstart-Modus und/oder Defrost-Modus, und/oder in Abhängigkeit eines Betriebszustands eines Kraftstoffzuheizers und/oder eines elektrischen Zuheizers kann das Bedarfssignal der Heizung auf Basis eines bestimmten Kennfeldwerts, beispielsweise 0 für "volle Heizleistung" oder 3 für "keine Heizleistung", erzeugt werden.

So kann in bestimmten Betriebsmoden der Heizung der Heizbedarf "volle Heizleistung" oder "keine Heizleistung" an die zentrale Auswerteeinrichtung übermittelt werden, ohne dass eine Plausibilitätsprüfung des Kennfeldwerts stattfindet. Konkret kann nach einen Kaltstart des Fahrzeugs so lange der Heizbedarf "keine Heizleistung" vom Klimasteuergerät an die zentrale Auswerteeinrichtung übermittelt werden, bis eine bestimmte Kühlmitteltemperatur erreicht oder eine applizierbare Zeit überschritten ist. Bei einem eingeschalteten Kraftstoffzuheizer kann dagegen immer der Heizbedarf "volle Heizleistung" gesendet werden.

Nachfolgend ist ein Ausführungsbeispiel der Erfindung anhand der beigefügten Figuren beschrieben.

Es zeigen:
- Fig. 1: in einem Blockschaltdiagramm einen Kühlmittelkreislauf eines Kraftfahrzeugs;
- Fig. 2: in einer Teilschnittansicht ein Klimagerät des Kraftfahrzeugs;
- Fig. 3: in einem Blockschaltdiagramm die Ansteuerung von Stellgliedern im Kühlmittelkreislauf aus der Fig. 1; und
- Fig. 4: in einer schematischen Ansicht die Erzeugung eines Bedarfssignals für einen Heizbedarf der Heizung aus der Fig. 2.

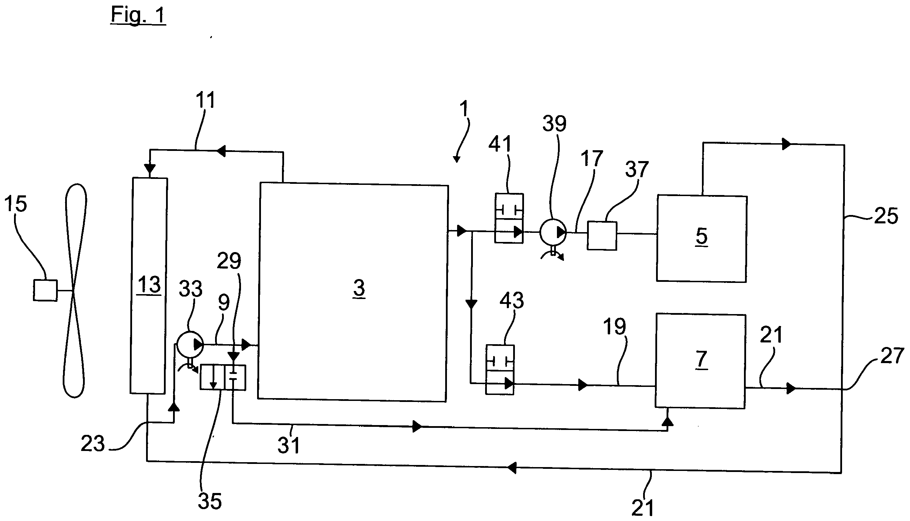

In der Fig. 1 ist ein Kühlmittelkreislauf 1 eines Kraftfahrzeuges schematisch dargestellt. Durch das im Kühlmittelkreislauf 1 umgewälzte Kühlmittel wird Wärme zwischen Wärmeerzeugern und Wärmeverbrauchern verteilt. Wärmeerzeuger beziehungsweise Wärmeverbraucher sind hier folgende Fahrzeugaggregate: eine Brennkraftmaschine beziehungsweise ein Motor 3, eine Heizung 5 sowie ein Getriebe 7. Die Wärmetauscher der Aggregate sind in der Fig. 1 nicht gesondert dargestellt.

Gemäß der Fig. 1 ist der Motor 3 über eine Zuleitung 9 sowie eine Ableitung 11 mit einem Kühler 13 verbunden, welcher durch einen Kühlerlüfter 15 angeströmt wird. Ferner geht aus der Fig. 1 hervor, dass die Heizung 5 über eine Zuleitung 17 und das Getriebe 7 über eine Zuleitung 19 mit dem Motor 3 verbunden sind. Eine Ableitung 21 des Getriebes 7 ist an einer Verzweigung 27 mit der Zuleitung 9 des Motors 3 verbunden, wohingegen eine Ableitung 25 der Heizung 5 an einer Verzweigung 27 mit der Ableitung 21 des Getriebes 7 verbunden ist. Des Weiteren zweigt die Zuleitung 9 des Motors 3 an der Verzweigung 29 in eine Bypassleitung 31 zum Getriebe 7 ab.

Gemäß der Fig. 1 ist in der Zuleitung 9 des Motors 3 eine Pumpe 33 stromauf der Verzweigung 29 angeordnet. Stromab der Verzweigung 29 weist die Bypassleitung 31 ein Ventil 35 auf. Durch ein Öffnen des Ventils 35 in der Bypassleitung 31 kann das Getriebe 7 gekühlt und somit eine Überhitzung vermieden werden. Stromauf der Heizung 5 sind in der Zuleitung 17 ein Zuheizer 37, eine Pumpe 39 und ein Ventil 41 angeordnet. Stromauf des Getriebes 7 ist in der Zuleitung 19 ein Ventil 43 vorgesehen.

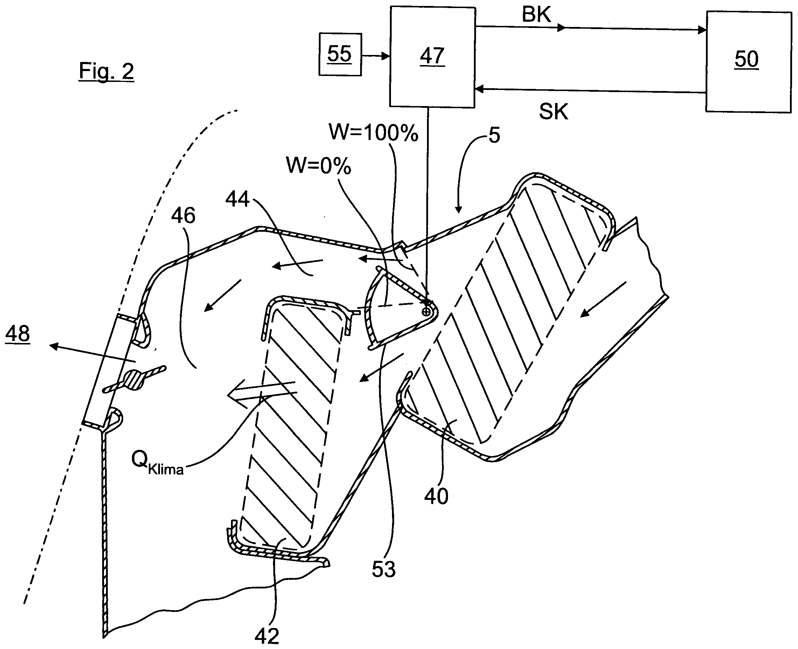

In der Fig. 2 ist die Heizung 5 in einer Teilschnittansicht gezeigt. Mit der strichpunktierten Linie ist die Mittelkonsole des Kraftfahrzeugs angedeutet. Wie aus der Fig. 2 hervorgeht, weist die Heizung 5 einen Verdampfer 40 eines hier nicht näher gezeigten Wärmepumpenkreislaufes und einen Wärmetauscher 42 auf. Zwischen dem Verdampfer 40 und dem Wärmetauscher 42 ist eine Temperaturmischklappe 53 angeordnet.

Mittels einer Winkelstellung W der Temperaturmischklappe 53 ist eine Aufteilung eines Luftstroms in einen Kaltluftstrom durch einen Kaltluftkanal 44 und einen Warmluftstrom durch den Wärmetauscher 42 steuerbar. Bei einer Winkelstellung W = 100 % ist der Kaltluftkanal 44 vollständig verschlossen. Bei einer Winkelstellung W = 0 % ist der Kaltluftkanal 44 vollständig geöffnet. Die Winkelstellung W wird durch ein Klimasteuergerät 47 gesteuert, welches in Abhängigkeit der Winkelstellung W ein Bedarfssignal BK erzeugt und an eine zentrale Auswerteeinrichtung 50 überträgt, wie es weiter unten beschrieben ist. Gemäß der Fig. 2 treffen der Warmluftstrom und der Kaltluftstrom in einem Mischraum 46 stromab des Wärmetauschers 42 und des Kaltluftkanals 44 wieder aufeinander und bilden einen Luftstrom der in einen Fahrzeuginnenraum 48 strömt. Auf diese Weise ist über das Heizelement 42 ein Wärmeanteil Q_{Klima} aus dem Kühlmittelkreislauf 1 der Fig. 1 auf den in den Fahrzeuginnenraum 48 strömenden Luftstrom übertragbar.

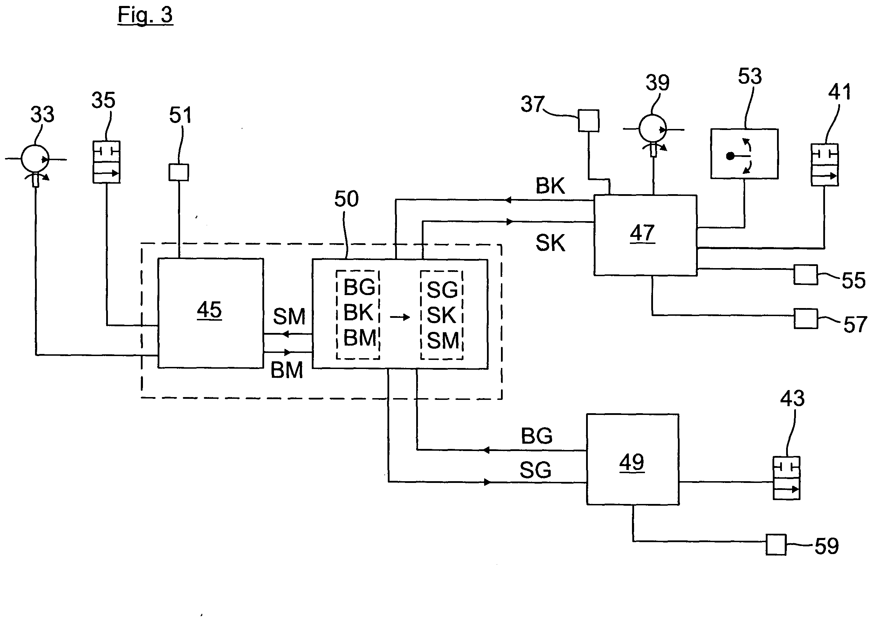

Nachfolgend ist die Ansteuerung der Stellglieder 33, 35, 39, 41, 43, 53 im Kühlmittelkreislauf 1 beschrieben. Während die Fig. 1 die Anordnung der Stellglieder 33, 35, 39, 41, 43, 53 im Kühlmittelkreislauf 1 zeigt, ist in der Fig. 3 die Ansteuerung dieser Stellglieder 33, 35, 39, 41, 43, 53 dargestellt.

Wie aus der Fig. 3 hervorgeht, ist ein Motorsteuergerät 45, das Klimasteuergerät 47 und ein Getriebesteuergerät 49 signaltechnisch mit der zentralen Auswerteeinrichtung 50 verbunden. Das Motorsteuergerät 45 ist mit der Pumpe 33, dem Ventil 35 sowie einem Sensor 51 verbunden. Das Klimasteuergerät 47 steht mit dem Zuheizer 37, der Pumpe 39, der Temperaturmischklappe 53, dem Ventil 41, einem Bedienfeld 55 und einem Sensor 57 in Verbindung. Das Getriebesteuergerät 49 ist signaltechnisch mit dem Ventil 43 und einem Sensor 59 verbunden. Für die Signalübertragung des Motorsteuergeräts 45, des Klimasteuergeräts 47 und des Getriebesteuergeräts 49 kann der CAN-Bus des Fahrzeugs verwendet werden.

Gemäß der Fig. 3 ermittelt das Klimasteuergerät 47 durch den Sensor 57 eine Außentemperatur Tₐ. Selbstverständlich kann das Klimasteuergerät 47 mit weiteren Sensoren verbunden sein, durch welche beispielsweise eine Kühlmitteltemperatur oder eine Ausblastemperatur ermittelbar ist. Auf Basis der empfangenen Informationen und einer benutzerseitig eingestellten Solltemperatur für den Fahrzeuginnenraum 48 berechnet das Klimasteuergerät 47 eine Sollausblastemperatur Tₛ und steuert in Bezug auf diese die Winkelstellung W der Temperaturmischklappe 53 aus der Fig. 2 an.

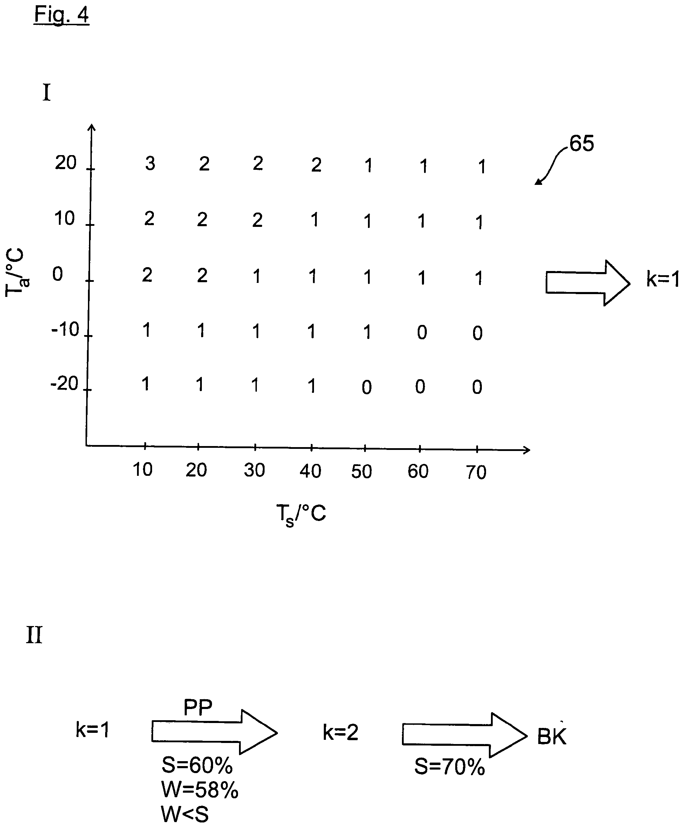

Das Klimasteuergerät 47 sendet gemäß der Fig. 3 den Heizbedarf der Heizung 5 an die zentrale Auswerteeinrichtung 50 in Form des Bedarfssignals BK. Die Erzeugung des Bedarfssignals BK ist in der Fig. 4 verdeutlicht. In einem ersten Schritt (I) ermittelt das Klimasteuergerät 47 in Abhängigkeit der Außentemperatur Tₐ und der Sollausblastemperatur Tₛ einen dem Heizbedarf zugeordneten Kennfeldwert K aus einem Kennfeld 65. Der Kennfeldwert K = 0 kann dabei zum Beispiel "volle Heizleistung", der Kennfeldwert K = 1 "mittlere Heizleistung", der Kennfeldwert K = 2 "kleine Heizleistung" und der Kennfeldwert K = 3 "keine Heizleistung" bedeuten.

In einem zweiten Schritt (II) wird der ermittelte Kennfeldwert K, hier K = 1, einer Plausibilitätsprüfung PP unterzogen. Dazu wird die Winkelstellung W = 58 % der Temperaturmischklappe 53 mit einem dem Kennfeldwert K = 1 zugeordneten Schwellenwert S = 60 % verglichen. Selbstverständlich werden im Falle anderer Kennfeldwerte, also K = 0, K = 2, oder K = 3, diese mit entsprechend zugeordneten anderen Schwellenwerten S verglichen. Da die Winkelstellung W = 58 % hier kleiner als der Schwellenwert S = 60 % ist, wird der Kennfeldwert K = 1 um Eins inkrementiert, wodurch ein Kennfeldwert K = 2 erhalten wird. Somit kann vermieden werden, dass bei einem hohen verfügbaren Wärmeanteil Q_{Klima} ein zu hoher Heizbedarf vom Klimasteuergerät 47 gefordert wird.

Auf Basis des Kennfeldwerts K = 2 wird schließlich das Bedarfssignal BK der Heizung 5 erzeugt. Beim Abändern des Kennfeldwerts K = 1 zu K = 2 wird der Schwellenwert S = 60 % zu S = 70 % abgeändert, so dass ein Dekrementieren des Kennfeldwerts K = 2 zu K = 1 erst stattfindet, wenn die Winkelstellung W der Temperaturmischklappe 53 größer als der Schwellenwert S = 70 % ist. Die Erzeugung des Bedarfssignals BK wird im Millisekundenbereich wiederholt, wodurch eine kontinuierliche Ermittlung des Heizbedarfs der Heizung 5 realisiert ist.

Mit dem in der Fig. 3 gezeigten Bedienfeld 55 sind verschiedene Betriebsmoden, zum Beispiel ein Defrost-Modus und/oder ein On-OFF-Modus, der Heizung 5 aktivierbar. Bei Aktivierung dieser Betriebsmoden wird das Bedarfssignal BK auf Basis bestimmter Kennfeldwerte erzeugt, ohne dass eine Plausibilitätsprüfung PP stattfindet. So kann beispielsweise im Defrost-Modus ein Bedarfssignal BK auf Basis des Kennfeldwerts K = 0 ("volle Heizleistung") erzeugt werden. Im Off-Modus kann dagegen ein Bedarfssignal BK auf Basis des Kennfeldwerts K = 3 ("keine Heizleistung") erzeugt werden.

Wie in der Fig. 3 ersichtlich, wird auch vom Getriebesteuergerät 49 anhand übertragener Informationen vom Sensor 59, beispielsweise der Getriebetemperatur, ein Bedarfssignal BG erzeugt und an die zentrale Auswerteeinrichtung 50 übertragen. In analoger Weise wird vom Motorsteuergerät 45 auf Basis übertragener Informationen vom Sensor 51 ein Bedarfssignal BM erzeugt und an die zentrale Auswerteeinrichtung 50 geleitet. Die empfangenen Bedarfssignale BK, BG, BM werden von der zentralen Auswerteeinrichtung 50 ausgewertet, insbesondere gewichtet und priorisiert. Auf Grundlage der Auswertung der Bedarfssignale BG, BK, BM werden von der zentralen Auswerteeinrichtung 50 schließlich Steuersignale SG, SK, SM erzeugt

Das dem Klimagerät 5 zugeordnete Steuersignal SK wird von der zentralen Auswerteeinrichtung 50 an das Klimasteuergerät 47 übertragen, welches in Abhängigkeit des Steuersignals SK die Pumpe 39 sowie das Ventil 41 im Kühlmittelkreislauf 1 ansteuert. Das dem Getriebe 7 zugeordnete Steuersignal SG wird von der zentralen Auswerteeinrichtung 50 an das Getriebesteuergerät 49 übermittelt, welches in Abhängigkeit des Steuersignals SG das Ventil 43 im Kühlmittelkreislauf 1 ansteuert. Das dem Motor 3 zugeordnete Steuersignal SM wird von der zentralen Auswerteeinrichtung 50 an Motorsteuergeräts 45 übermittelt. Das Motorsteuergerät 45 steuert in Abhängigkeit des Steuersignals SM die Pumpe 33 und das Ventil 35 im Kühlmittelkreislauf 1 an.

Die einzelnen Steuergeräte 45, 47, 49 steuern die Stellglieder 33, 35, 39, 41, 43, 53 im Kühlmittelkreislauf 1 also nicht autark, sondern in Abhängigkeit der zentralen Auswerteeinrichtung 50 an.

## Patentansprüche

1. Verfahren zur Verteilung von Wärme in einem Kühlmittelkreislauf (1) eines Fahrzeugs, in welchem Kühlmittelkreislauf (1) Stellglieder (33, 35, 39, 41, 43) zur Verteilung von in einer Brennkraftmaschine (3) erzeugter Wärme auf zumindest ein erstes Aggregat (3), das heißt der Brennkraftmaschine, und ein zweites Aggregat (5), das heißt einer Heizung, geschaltet sind, wobei dem ersten Aggregat (3) ein Motorsteuergerät (45) zur Erzeugung eines ersten Bedarfssignals (BM) zugeordnet ist, das dem Heiz- oder Kühlbedarf des ersten Aggregats (3) entspricht, und dem zweiten Aggregat (5) ein Klimasteuergerät (47) zur Erzeugung eines zweiten Bedarfssignals (BK) zugeordnet ist, das dem Heiz- oder Kühlbedarf des zweiten Aggregates (5) entspricht, wobei die als das zweite Aggregat (5) ausgebildete Heizung eine Eingabeeinheit (55) zur insassenseitigen Eingabe einer Solltemperatur im Fahrzeuginnenraum und zumindest ein Regelorgan (53) aufweist, und das Regelorgan (53) in Abhängigkeit von der Solltemperatur mit einer Stellgröße (W) angesteuert wird, **dadurch gekennzeichnet, dass** dem Motorsteuergerät (45) und dem Klimasteuergerät (47) eine zentrale Auswerteeinrichtung (50) zugeordnet ist, die die Bedarfsignale (BM, BK) auswertet, das heißt gewichtet und/oder priorisiert, und auf dieser Grundlage Steuersignale (SM, SK) für die Stellglieder (33, 35, 39, 41, 43) des Kühlmittelkreislaufs (1) erzeugt, und dass zur Erzeugung des Bedarfssignals (BK) in einem ersten Schritt (I) das Bedarfssignal (BK) anhand der Außentemperatur (Tₐ) und einer Sollausblastemperatur (Tₛ) abgeschätzt wird, und in einem zweiten Schritt (II) das Bedarfssignal (BK) in Abhängigkeit von der Stellgröße (W) des Regelorgans (53) korrigiert wird, und dass das Klimasteuergerät (47) im ersten Schritt (I) einen Kennfeldwert (K) aus einem Kennfeld (65) in Abhängigkeit von der Außentemperatur (Tₐ) und der Sollausblastemperatur (Tₛ) bestimmt, und dass der Kennfeldwert (K) im zweiten Schritt (II) in Abhängigkeit von der Stellgröße (W) des Regelorgans (53) das Bedarfssignal (BK) der Heizung (5) ergibt.

2. Verfahren nach Anspruch 1, **dadurch gekennzeichnet, dass** die Wärme zudem auf ein drittes Aggregat (7), etwa einem Getriebe, verteilbar ist, wobei dem dritten Aggregat (7) ein Steuergerät (49) zur Erzeugung eines dritten Bedarfssignals (BG) zugeordnet ist, das dem Heiz- oder Kühlbedarf des dritten Aggregates (7) entspricht, und die zentrale Auswerteeinrichtung (50) das dritte Bedarfssignal (BG) bei der Auswertung berücksichtigt.

3. Verfahren nach Anspruch 1 oder 2, **dadurch gekennzeichnet, dass** die zentrale Auswerteeinrichtung (50) mit den Steuergeräten (45, 47, 49) über Signalleitungen verbunden ist, durch welche die Bedarfssignale (BG, BK, BM) und/oder die Steuersignale (SG, SK, SM) übertragbar sind.

4. Verfahren nach Anspruch 1, 2 oder 3, **dadurch gekennzeichnet, dass** die Bedarfssignale (BG, BK, BM) und/oder die Steuersignale (SG, SK, SM) über einen CAN-Bus des Fahrzeugs übertragbar sind.

5. Verfahren nach einem der vorhergehenden Ansprüche, **dadurch gekennzeichnet, dass** die Stellglieder (33, 35, 39, 41, 43, 53) Pumpen (33, 39) und/oder Ventile (35, 41, 43) im Kühlmittelkreislauf (1) umfassen.

6. Verfahren nach einem der vorhergehenden Ansprüche, **dadurch gekennzeichnet, dass** die zentrale Auswerteeinrichtung (50) mit einem der Steuergeräte (45, 47, 49), insbesondere dem Motorsteuergerät (45) eine Baueinheit bildet.

7. Verfahren nach einem der vorhergehenden Ansprüche, **dadurch gekennzeichnet, dass** bei einer Hybridbauweise des Fahrzeugs die Wärme zudem auf eine E-Maschine als weiteres Aggregat verteilbar ist.

8. Verfahren nach einem der vorhergehenden Ansprüche, **dadurch gekennzeichnet, dass** das Klimagerät (5) in Abhängigkeit von der Stellgröße (W) das Bedarfssignal (BK) ändert.

9. Verfahren nach einem der vorhergehenden Ansprüche, **dadurch gekennzeichnet, dass** der Kennfeldwert (K) bei Unterschreiten und/oder Überschreiten eines Schwellenwertes (S) der Stellgröße (W) des Regelorgans (53) abgeändert, insbesondere um Eins inkrementiert oder dekrementiert, wird.

10. Verfahren nach Anspruch 9, **dadurch gekennzeichnet, dass** nach der Abänderung des Kennfeldwertes (K) der Schwellenwert (S) ebenfalls abgeändert wird.

11. Verfahren nach einem der vorhergehenden Ansprüche, **dadurch gekennzeichnet, dass** das Klimasteuergerät (45) die Erzeugung des Bedarfssignals (BK) der Heizung (5) in bestimmten Zeitabständen, insbesondere im Millisekundenbereich, wiederholt.

12. Verfahren nach einem der vorhergehenden Ansprüche, **dadurch gekennzeichnet, dass** in einem bestimmten Betriebszustand der Heizung (5), insbesondere On-Off-Modus und/oder Kaltstart-Modus und/oder Defrost-Modus, und/oder in Abhängigkeit eines Betriebszustands eines Kraftstoffzuheizers (37) und/oder eines elektrischen Zuheizers das Bedarfssignal (BK) der Heizung (5) unabhängig von der Außentemperatur (Tₐ), der Sollausblastemperatur und/oder der Kühlmitteltemperatur auf einen vorgegebenen Wert festlegbar ist.

## Claims

1. Method for distributing heat in a coolant circuit (1) of a vehicle, in which coolant circuit (1) actuators (33, 35, 39, 41, 43) are connected for distributing heat generated in an internal combustion engine (3) to at least one first unit (3), i.e. the internal combustion engine, and a second unit (5), i.e. a heater, wherein an engine control unit (45) is allocated to the first unit (3) for generating a first requirement signal (BM) which corresponds to the heating or cooling requirement of the first unit (3), and an air conditioning control unit (47) is allocated to the second assembly (5) for generating a second requirement signal (BK) which corresponds to the heating or cooling requirement of the second unit (5), wherein the heater formed as the second unit (5) comprises an input unit (55) for inputting, by the passenger, a target temperature in the interior of the vehicle, and at least one regulating unit (53), and the regulating unit (53) is controlled by a manipulated variable (W) depending on the target temperature, **characterised in that** a central evaluation unit (50) is allocated to the engine control unit (45) and the air conditioning control unit (47) which evaluates the requirement signals (BM, BK), i.e. in a weighted and/or prioritized manner, and on this basis creates control signals (SM, SK) for the actuators (33, 35, 39, 41, 43) of the coolant circuit (1), and in a first step (I), the requirement signal (BK) is evaluated based on the outside temperature (Tₐ) and a target exhaust air temperature (Tₛ) for generating the requirement signal (BK) and, in a second step (II), the requirement signal (BK) is corrected depending on the manipulated variable (W) of the control unit (53), and the air conditioning control unit (47) determines in the first step (I) a characteristic value (K) from a characteristic map (65) depending on the outside temperature (Tₐ) and the target exhaust air temperature (Tₛ), and in the second step (II), the characteristic value (K) yields the requirement signal (BK) of the heater (5) depending on the manipulated variable (W) of the control unit (53).

2. Method according to claim 1, **characterised in that** the heat can be additionally distributed to a third unit (7), for instance a gearing, wherein a control device (49) is allocated to the third unit (7) for generating a third requirement signal (BG) which corresponds to the heating or cooling requirement of the third unit (7), and the central evaluation unit (50) takes the third requirement signal (BG) into account in the evaluation.

3. Method according to claim 1 or 2, **characterised in that** the central evaluation unit (50) is connected to the control units (45, 47, 49) via signal lines, through which the requirement signals (BG, BK, BM) and/or the control signals (SG, SK, SM) can be transmitted.

4. Method according to claim 1, 2 or 3, **characterised in that** the requirement signals (BG, BK, BM) and/or the control signals (SG, SK, SM) can be transmitted via a CAN bus of the vehicle.

5. Method according to any of the preceding claims, **characterised in that** the actuators (33, 35, 39, 41, 43, 53) comprise pumps (33, 39) and/or valves (35, 41, 43) in the coolant circuit (1).

6. Method according to any of the preceding claims, **characterised in that** the central evaluation unit (50) forms a unit with one of the control units (45, 47, 49), in particular with the engine control unit (45).

7. Method according to any of the preceding claims, **characterised in that,** with a hybrid construction of vehicle, the heat can further be distributed to an e-machine as a further unit.

8. Method according to any of the preceding claims, **characterised in that** the air conditioning unit (5) changes the requirement signal (BK) depending on the manipulated variable (W).

9. Method according to any of the preceding claims, **characterised in that** the characteristic value (K) is changed, in particular incremented or decremented by one, if the manipulated variable (W) of the control unit (53) falls below or exceeds a threshold value (S).

10. Method according to claim 9, **characterised in that** after changing the characteristic value (K), also the threshold value (S) is changed.

11. Method according to any of the preceding claims, **characterised in that** the air conditioning control unit (45) repeats the generation of the requirement signal (BK) of the heater (5) in certain time intervals, in particular in the millisecond range.

12. Method according to any of the preceding claims, **characterised in that**, in a certain operating condition of the heater (5), in particular on/off mode and/or cold start mode and/or defrosting mode, and/or depending on an operating condition of a fuel-fired auxiliary heater (37) and/or an electrical auxiliary heater, the requirement signal (BK) of the heater (5) can be set to a predefined value independent of the outside temperature (Ta), the target exhaust air temperature and/or the coolant temperature.

## Revendications

1. Procédé de distribution de chaleur dans un circuit de réfrigérant (1) d'un véhicule, dans lequel circuit de réfrigérant (1) des actionneurs (33, 35, 39, 41, 43) sont connectés pour distribuer de la chaleur produite par un moteur à combustion interne (3) sur au moins un premier groupe (3), c'est-à-dire le moteur à combustion interne, et un deuxième groupe (5), c'est-à-dire un dispositif de chauffage, dans lequel est affecté au premier groupe (3) un appareil de commande de moteur (45) pour la production d'un premier signal de besoin (BM), qui correspond aux besoins en chauffage ou en refroidissement du premier groupe (3), et est affecté au deuxième groupe (5) un appareil de commande de climatisation (47) pour produire un second signal de besoin (BK), qui correspond aux besoins en chauffage ou en refroidissement du second groupe (5), dans lequel le dispositif de chauffage désigné par le deuxième groupe (5) présente une unité d'entrée (55) pour introduire côté passagers une température théorique dans l'espace intérieur du véhicule et au moins un appareil de réglage (53), et l'appareil de réglage (53) est commandé par une grandeur de réglage (W) en fonction de la température théorique, **caractérisé en ce que** l'on affecte à l'appareil de commande de moteur (45) et à l'appareil de commande de climatisation (47) un dispositif d'évaluation central (50) qui évalue les signaux de besoin (BM, BK), c'est-à-dire qui pondère et/ou donne la priorité et produit sur cette base des signaux de commande (SM, SK) pour les actionneurs (33, 35, 39, 41, 43) du circuit de réfrigérant (1), et, pour produire le signal de besoin (BK) dans une première étape (I), le signal de besoin (BK) est évalué sur la base de la température externe (Tₐ) et d'une température de purge théorique (Tₛ) et, dans une seconde étape (II), le signal de besoin (BK) est corrigé en fonction de la grandeur de réglage (W) de l'appareil de réglage (53), et l'appareil de commande de climatisation (47) détermine dans la première étape (I) une valeur cartographique (K) à partir d'une cartographie (65) en fonction de la température externe (Tₐ) et de la température de purge théorique (Tₛ), et la valeur cartographique (K) fournit le signal de besoin (BK) du dispositif de chauffage (5) dans la seconde étape (II) en fonction de la grandeur de réglage (W) de l'appareil de réglage (53).

2. Procédé selon la revendication 1, **caractérisé en ce que** la chaleur peut être distribuée en outre à un troisième groupe (7), notamment un mécanisme, dans lequel on affecte au troisième groupe (7) un appareil de commande (49) pour produire un troisième signal de besoin (BG), qui correspond aux besoins en chaleur ou en refroidissement du troisième groupe (7) et le dispositif d'évaluation central (50) prend en compte le troisième signal de besoin (BG) lors de l'évaluation.

3. Procédé selon la revendication 1 ou 2, **caractérisé en ce que** le dispositif d'évaluation central (50) est raccordé aux appareils de commande (45, 47, 49) via des lignes de signalisation par lesquelles les signaux de besoin (BG, BK, BM) et/ou les signaux de commande (SG, SK, SM) peuvent être transférés.

4. Procédé selon la revendication 1, 2 ou 3, **caractérisé en ce que** les signaux de besoin (BG, BK, BM) et/ou les signaux de commande (SG, SK, SM) peuvent être transférés via un bus CAN du véhicule.

5. Procédé selon l'une quelconque des revendications précédentes, **caractérisé en ce que** les actionneurs (33, 35, 39, 41, 43, 53) comprennent des pompes (33, 39) et/ou des vannes (35, 41, 43) dans le circuit de réfrigérant (1).

6. Procédé selon l'une quelconque des revendications précédentes, **caractérisé en ce que** le dispositif d'évaluation central (50) forme une unité structurelle avec l'un des appareils de commande (45, 47, 49), en particulier avec l'appareil de commande de moteur (45).

7. Procédé selon l'une quelconque des revendications précédentes, **caractérisé en ce que,** dans le cas d'un mode de construction hybride du véhicule, la chaleur peut être distribuée en outre sur une machine électrique comme autre groupe.

8. Procédé selon l'une quelconque des revendications précédentes, **caractérisé en ce que** l'appareil de climatisation (5) modifie le signal de besoin (BK) en fonction de la grandeur de réglage (W).

9. Procédé selon l'une quelconque des revendications précédentes, **caractérisé en ce que** la valeur cartographique (K) est modifiée, en particulier incrémentée ou décrémentée de un lors d'une réduction et/ou d'un dépassement d'une valeur de seuil (S) de la grandeur de réglage (W) de l'appareil de réglage (53).

10. Procédé selon la revendication 9, **caractérisé en ce que,** après la modification de la valeur cartographique (K), la valeur de seuil (S) est également modifiée.

11. Procédé selon l'une quelconque des revendications précédentes, **caractérisé en ce que** l'appareil de commande de climatisation (45) répète la production du signal de besoin (BK) du chauffage (5) à intervalles de temps déterminés, en particulier dans la plage des millisecondes.

12. Procédé selon l'une quelconque des revendications précédentes, **caractérisé en ce que,** dans un état de fonctionnement déterminé du dispositif de chauffage (5), en particulier en mode marche-arrêt et/ou en mode de démarrage du refroidissement et/ou en mode de dégivrage et/ou en fonction d'un état de fonctionnement d'un injecteur de carburant (37) et/ou d'un injecteur électrique, le signal de besoin (BK) du dispositif de chauffage (5) peut être établi à une valeur préétablie indépendamment de la température externe (Tₐ), de la température de purge théorique et/ou de la température du réfrigérant.
